# EUROPEAN PATENT SPECIFICATION

(11) **EP 2 269 443 B1**
(45) Date of publication and mention of the grant of the patent: **27.08.2014**
(21) Application number: 10250209.3
(22) Date of filing: 08.02.2010
(51) Int. Cl.: A01G 27/00, A01G 27/06

(54) **Flower pot using humidity sensor material to prompt watering**
Blumentopf mit Feuchtigkeitssensormaterial zur umgehenden Wässerung
Pot de fleurs utilisant un matériau de détection d'humidité pour amorcer l'arrosage

(30) Priority: 02.07.2009 TW 098212008
(43) Date of publication of application: 05.01.2011
(73) Proprietor: Far East University, Tainan County 74448 (TW)
(72) Inventor: Wang, Yen-Zen, Sinshih Township Tainan County 74448 (TW); Chan, Tien-Yin, Sinshih Township Tainan County 74448 (TW); Lee, Chin-Sheng, Sinshih Township Tainan County 74448 (TW)
(74) Representative: Lang, Christian

(56) References cited:
- WO-A1-2005/015981
- DE-U1- 20 011 147
- FR-A1- 2 301 013
- GB-A- 2 233 201
- GB-A- 190 930 306

## Description

### BACKGROUND OF THE INVENTION

### (a) Field of the Invention

The present invention relates to a flower pot using humidity sensor material to prompt watering, and more particularly uses humidity sensor material (3, 3A, 3B) to sense the water level within the flower pot, whereby, the humidity sensor material (3, 3A, 3B) presents a transparent color when water is sensed, thereby readily prompting the user to add water.

### (b) Description of the Prior Art

In general, potted plants require timely and regular watering, and frequently-used methods to accomplish this include additionally placing a dish at the base of the potted plant, thus, when an excessive amount of water is added to the potted plant then the superfluous water is able to flow out of holes in the base of the flower pot and collect in the dish. However, what makes such a method troublesome is that the water within the dish easily allows mosquitoes to propagate, and is thus unfavorable for use in the home environment.

Moreover, the majority of manufacturing methods of traditional flower pots on the current market adopt direct injection molding means, which makes it difficult to manufacture flower pots with partial inlays of a second material. And if a flower pot is inlaid with second material, then the flower pot has shortcomings including the possibility of the inlay not sealing properly, giving the flower pot a non-aesthetic appearance, or there is difficulty in directly attaching humidity sensor material over time.

Republic of China (Taiwan) patent No. 1241158, entitled "Manufacturing Method of Multi-pore Flower Pot", discloses a method by which a flower pot is formed by injecting an even mixture of silicon dioxide (SiO₂) and aluminum oxide (Al₂O₃) into a flower pot mold, and, finally, the end product is completed by heating and baking means. Characteristics of the above mentioned taiwan Patent primarily lie in: small and granular pieces of dry plant material are further mixed in during the process of mixing the silicon dioxide and aluminum oxide, and because of its non-refractory properties, the dry plant material is burned away during the heating and baking process, thus causing the position of each plant material to be transformed into a hollow pore space, thereby forming a multi-pore flower pot. However the following shortcomings exist:
1. In the manufacturing method of a multi-pore flower pot of the prior art, the steps require evenly mixing more than two absorbing materials, and injection moulding to form the pot body, and does not attach humidity sensor material to the outer pot body. Furthermore, a water dish must be placed at the base of the pot to supply water.
2. Is unable to present a watering message to prompt the user, and thus the user cannot know whether the water content of the plant soil of the potted plant is sufficient or not, resulting in the possibility of the potted plant withering and dying.

Prior flower pots include a twin-walled flower pot with an inner pot wall and outer pot wall defining a reservoir between them as disclosed in GB2233201, over which the claims of the present invention are characterised. Prior flower pots also include flower pots of a single wall with a moisture indicator mounted on the outside of the pot and linked to the soil in the pot by a foam pad through the wall as disclosed in FR2301013.

### SUMMARY OF THE INVENTION

In light of the problems of the multi-pore flower pot of the prior art being unable to use humidity sensor material to prompt watering, thus, the present invention provides a flower pot using humidity sensor material to prompt watering, as follows.

The present invention discloses a flower pot using humidity sensor material to prompt watering, comprising the features of claim 1.

An outer pot body, which is fabricated from multi-pore material, and the outer wall of the outer pot body is coated with a water resisting layer, reserving a portion therein for a sensing region; an inner pot body, which is fabricated from multi-pore material and is disposed within the outer pot body, a water containing area is provided between the pot wall of the outer pot body and the pot wall of the inner pot body, and the pot brim of the inner pot body is provided with a water filling hole; and a humidity sensor material, which is coated on the sensing region of the outer pot body.

The material of the aforementioned water resisting layer is colored glaze or plastic, thereby not only providing a water resisting function, but also enabling decorative patterns and designs to be configured thereon, improving aesthetic appearance thereof, and increasing the desire to purchase.

A caution graph, including a word, pattern, symbol or prompt sign, is set between the aforementioned sensing region and humidity sensor material of the pot body, and the area of the caution graph is smaller than the area of the sensing region, thereby enabling the water to permeate through the multi-pore outer pot body to the humidity sensor material, whereby the humidity sensor material presents an opaque state when no water is absorbed, and presents a transparent state after absorbing water, as well as displaying the caution graph.

The present invention is provided with the following advantages:
1. Components of the present invention are compact, and cost is inexpensive, thereby improving market competitiveness, and increasing purchase interest of the consumer.
2. The present invention uses humidity sensor material to assist in prompting the user to add water to the potted plant at relevant times, thereby readily reminding the user that the plants within the flower pot water are lacking water.
3. The material of the inner pot body of the present invention is multi-pore material, and the tiny holes distributed within the multi-pore material are used to produce a capillary action, whereby water in the outer pot body is able to permeate into the inner pot body, whereupon the soil in the inner pot body absorbs the water content, and further regulates the water content of the plant within the flower pot.

To enable a further understanding of said objectives and the technological methods of the invention herein, a brief description of the drawings is provided below followed by a detailed description of the preferred embodiments.

### BRIEF DESCRIPTION OF THE DRAWINGS

FIG. 1 is a schematic cross-sectional view of an embodiment of the present invention.
FIG. 2 is a schematic view depicting use of the embodiment according to the present invention.
FIG. 3 is a schematic view depicting the change after a humidity sensor material of the embodiment absorbs water according to the present invention.
FIG. 4 is a schematic view depicting the change before the humidity sensor material of the embodiment absorbs water according to the present invention.
FIG. 5 is a cutaway view of a varied embodiment according to the present invention.
FIG. 6 is a schematic view depicting use of the varied embodiment according to the present invention.
FIG. 7 is an external view depicting a capillary rod of another varied embodiment according to the present invention.
FIG. 8 is a schematic view depicting use of the another varied embodiment according to the present invention.

### DETAILED DESCRIPTION OF THE PREFERRED EMBODIMENTS

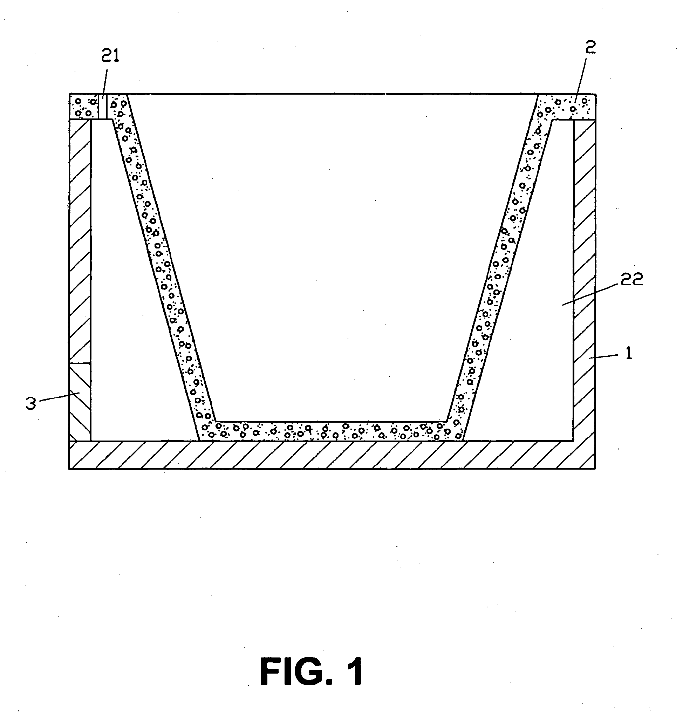

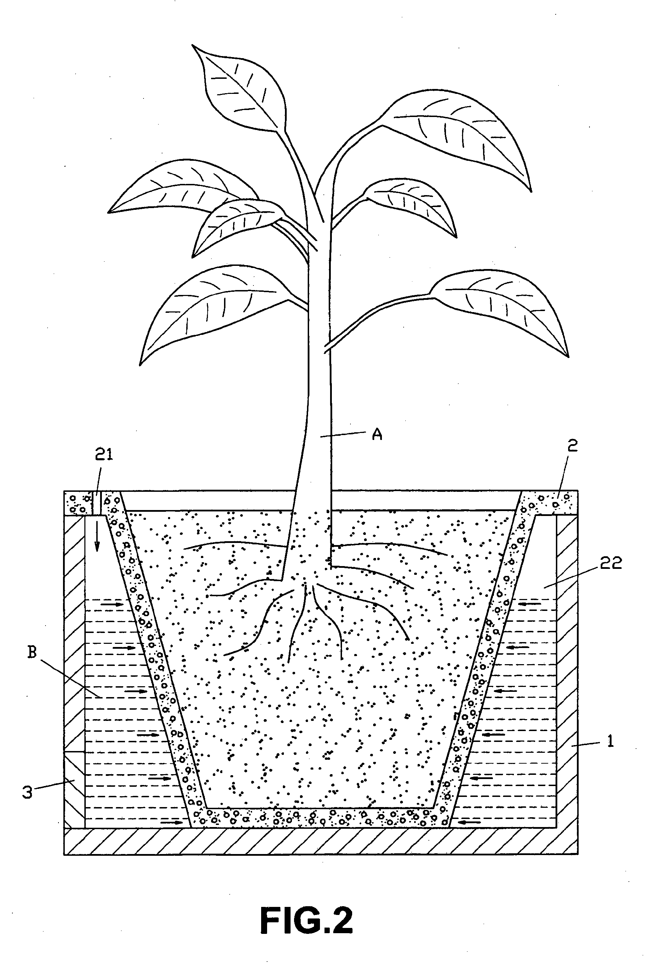

Referring first to FIG. 1 and FIG. 2, which show a flower pot of the present invention that uses humidity sensor material to prompt watering, comprising:

An outer pot body (1), which is in the form of a watertight dish body.

An inner pot body (2), the inner pot body (2) being fabricated from multi-pore material and is disposed within the interior of the outer pot body (1). Moreover, the pot brim of the inner pot body (2) is provided with a water filling hole (21), and a water containing area (22) is provided between the pot wall of the outer pot body (1) and the pot wall of the inner pot body (2).

A humidity sensor material (3), which is inlaid and penetrates a lower portion of the pot wall of the outer pot body (1), thereby enabling connectivity with the water containing area (22).

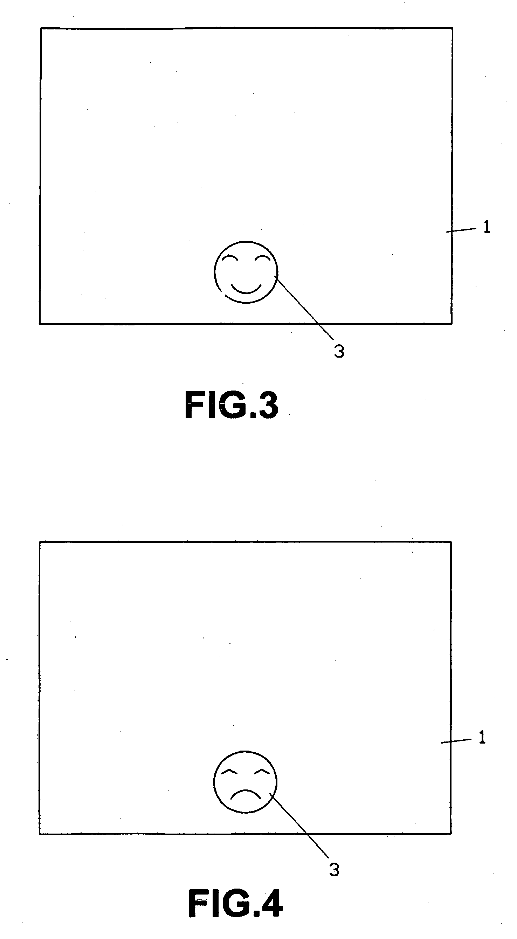

When using the present invention, soil is placed within the inner pot body (2) and a plant (A) is planted therein, after which water (B) is poured into the water containing area (22) between the inner pot body (2) and the outer pot body (1) through the water filling hole (21), thereby enabling the humidity sensor material (3) of the pot wall of the outer pot body (1) to come in contact with the water (B) and present a transparent state. Furthermore, the inner pot body (2) uses the distribution of tiny holes of the multi-pore material to produce a capillary effect, which enables the water (B) to pass through the pores and permeate into the inner pot body (2), thereby enabling the soil within the inner pot body (2) to absorb the water (B), and further regulate humidity of the soil. The water containing area (22) is used to store the water (B), so that when the soil within the inner pot body (2) dries up, then the water (B) stored within the water containing area (22) permeates into the soil of the inner pot body (2) through the tiny holes in the multi-pore material for the plant (A) to absorb and use. Furthermore, when there is a shortage of the water (B) in the water containing area (22) or the water (B) has dried up, at this time, because the humidity sensor material (3) is not in contact with the water (B), thus, the transparent state of the humidity sensor material (3) changes into an opaque state; or a caution graph, including a word, pattern, symbol or prompt sign, is displayed, thereby prompting the user that the water (B) needs to be added to the water containing area (22) through the water filling hole (21) to prevent the plant (A) from dying due to the soil running dry. Accordingly, the humidity sensor material (3) of the pot body can be made to display a graph, as depicted in FIG. 3 and FIG. 4, thereby enabling the user to know whether the water (B) or humidity of the soil within the inner pot body (2) is adequate or not and sufficient to enable the plant (A) to grow. The prompt function is very explicit, thus the present invention facilitates in preventing the plant from easily withering and dying due to lack of water, thereby aiding in the growth of the plant.

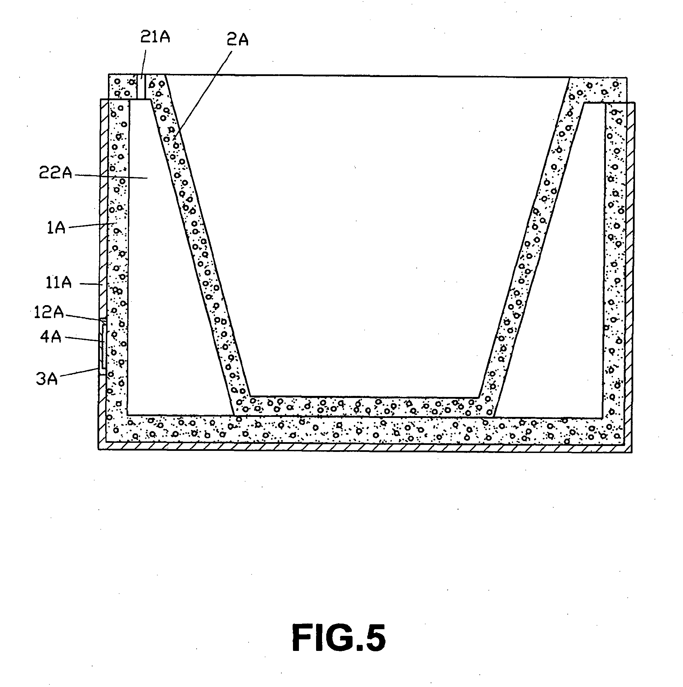

Referring to FIG. 5, which depicts a varied embodiment of the present invention, comprising:

An outer pot body (1A), which is fabricated from multi-pore material, and the outer wall of the outer pot body (1A) is coated with a water resisting layer (11A), the material of the water resisting layer (11A) can be colored glaze or plastic, reserving a portion therein for a sensing region (12A); an inner pot body (2A), which is fabricated from multi-pore material and is disposed within the outer pot body (1A), moreover, the pot brim of the inner pot body (2A) is provided with a water filling hole (21A), and a water containing area (22A) is provided between the pot wall of the outer pot body (1A) and the pot wall of the inner pot body (2A); a humidity sensor material (3A), which is coated on the sensing region (12A) of the outer pot body (1A), and a caution graph (4A), including a word, pattern, symbol or prompt sign, is formed between the sensing region (12A) of the outer pot body (1A) and the humidity sensor material (3A), in which the area of the caution graph (4A) is smaller than the area of the sensing region (12A), thereby enabling the water content to permeate into the humidity sensor material (3A) through the multi-pore outer pot body (1A). Moreover, the humidity sensor material (3A) is in an opaque state before absorbing water, and presents a transparent state after absorbing water, thereby displaying the caution graph (4A).

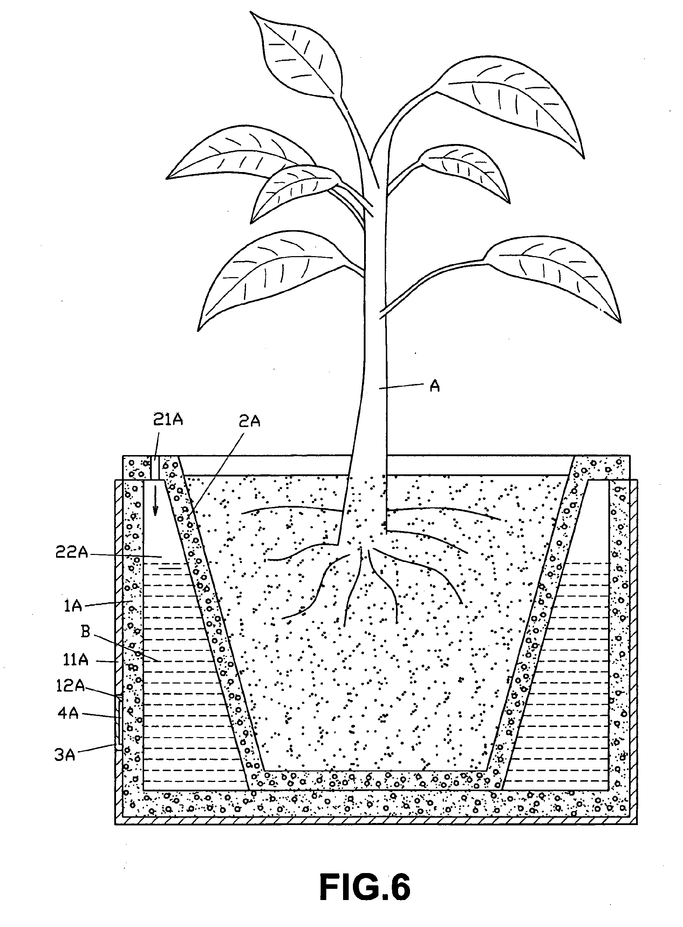

Referring to FIG. 6, when using the present invention, similar to the description of the above embodiment, the plant (A) is planted within the inner pot body (2A), and the water (B) is poured into the water containing area (22A) through the water filling hole (21A), the only difference being: the water (B) within the water containing area (22A) permeates into the multi-pore outer pot body (1A) by means of a capillary phenomenon, and presents a transparent state through an absorption response of the humidity sensor material (3A), thereby displaying the caution graph (4A). In contrast, when the water within the water containing area (22A) is insufficient, thereby preventing the humidity sensor material (3A) from absorbing the water (B), then the humidity sensor material (3A) presents an opaque state, and the user is reminded to add the water (B) to the water containing area (22A) through the water filling hole (21A).

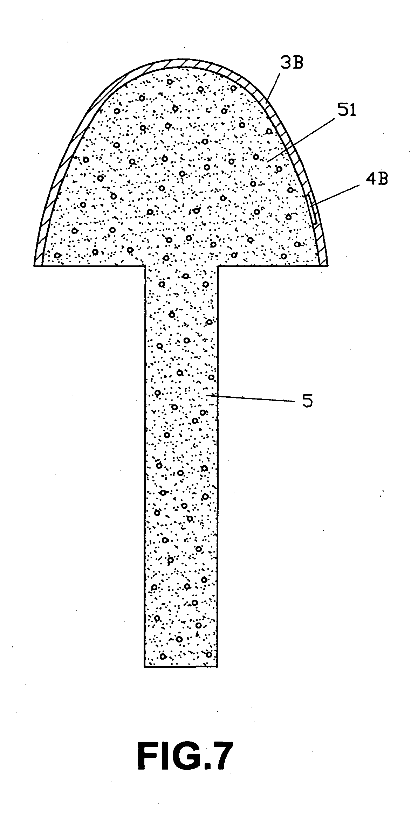

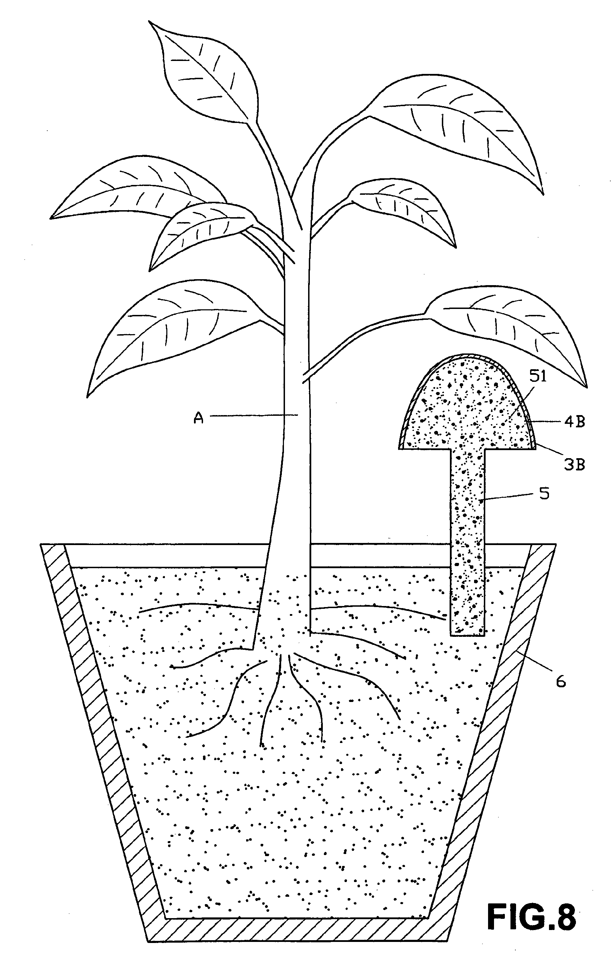

Referring to FIG. 7 and FIG. 8, which show another varied embodiment of the present invention, in which is disposed a multi-pore capillary rod (5) provided with a sensing region (51) thereon. The sensing region (51) is coated with a humidity sensor material (3B), and a caution graph (4B), including a word, pattern, symbol or prompt sign is formed between the sensing region (51) and the humidity sensor material (3B). The capillary rod (5) is inserted into a plant pot (6), and when the water content of the plant pot (6) is sufficient then the capillary rod (5) absorbs water to the sensing region (51) through capillary action, thereby causing the humidity sensor material (3B) to present a transparent state and display the caution graph (4B). On the contrary, when the humidity sensor material (3B) presents an opaque state, then the user is reminded to add water to the plant pot (6).

It is of course to be understood that the embodiments described herein are merely illustrative of the principles of the invention and that a wide variety of modifications thereto may be effected by persons skilled in the art without departing from the spirit and scope of the invention as set forth in the following claims.

## Claims

1. A flower pot comprising: an outer pot body (1A), an inner pot body (2A), the inner pot body (2A) is fabricated from multi-pore material and is disposed within the outer pot body (1A), a water containing area (22A) is provided between the pot wall of the outer pot body (1A) and the pot wall of the inner pot body (2A), and the pot brim of the inner pot body (2A) is provided with a water filling hole (21A); **characterised in that** the flower pot is a flower pot using humidity sensor material to prompt watering, the outer pot body (1A) is fabricated from multi-pore material, and the outer wall of the outer pot body (1A) is coated with a water resisting layer (11A), reserving a portion therein for a sensing region (12A); the flower pot having a humidity sensor material (3A), the humidity sensor material (3A) is coated on the sensing region (12A) of the outer pot body (1A).

2. The flower pot using humidity sensor material to prompt watering according to claim 1, wherein the material of the water resisting layer (11A) is coloured glaze.

3. The flower pot using humidity sensor material to prompt watering according to claim 1, wherein the material of the water resisting layer (11A) is high polymer plastic.

4. The flower pot using humidity sensor material to prompt watering according to claim 1, wherein a caution graph (4A), including a word, pattern, symbol or prompt sign is formed between the sensing region (12A) of the outer pot body (1A) and the humidity sensor material (3A), the humidity sensor material (3A) presents an opaque state when no water is absorbed, and presents a transparent state after absorbing water, as wall as displaying the caution graph (4A).

5. The flower pot using humidity sensor material to prompt watering according to claim 4, wherein the area of the caution graph (4A) is smaller than the area of the sensing region (12A).

## Patentansprüche

1. Blumentopf, der einen äußeren Topfkörper (1A) und einen inneren Topfkörper (2A) umfasst, wobei der innere Topfkörper (2A) aus einem porösem Material gebildet ist und innerhalb des äußeren Topfkörpers (1A) angebracht ist, wobei eine wasserhaltige Zone (22A) zwischen der Topfwand des äußeren Topfkörpers (1A) und der Topfwand des inneren Topfkörpers (2A) ausgebildet ist, und wobei der Topfrand des inneren Topfkörpers (2A) eine Wassernachfüllöffnung (21A) aufweist,
**dadurch gekennzeichnet, dass**
der Blumentopf ein Blumentopf ist, der ein Feuchtigkeitssensormaterial verwendet, um eine Wässerung zu veranlassen, wobei der äußere Topfkörper (1A) aus einem porösen Material gebildet ist und die Außenwand des äußeren Topfkörpers (1A) mit einer wasserfesten Schicht (11A) beschichtet ist, wobei ein Teil davon mit einer Sensorregion (12A) belegt ist, und wobei der Blumentopf ein Feuchtigkeitssensormaterial (3A) beinhaltet, wobei das Feuchtigkeitssensormaterial (3A) auf die Sensorregion (12A) des äußeren Topfkörpers (1A) beschichtet ist.

2. Blumentopf, der ein Feuchtigkeitssensormaterial verwendet, um eine Wässerung zu veranlassen, nach Anspruch 1, wobei das Material der wasserfesten Schicht (11A) eine farbige Lasur ist.

3. Blumentopf, der ein Feuchtigkeitssensormaterial verwendet, um eine Wässerung zu veranlassen, nach Anspruch 1, wobei das Material der wasserfesten Schicht (11A) ein hochpolymerer Kunststoff ist.

4. Blumentopf, der ein Feuchtigkeitssensormaterial verwendet, um eine Wässerung zu veranlassen, nach Anspruch 1, wobei zwischen der Sensorregion (12A) des außeren Topfkörpers (1A) und dem Feuchtigkeitssensormaterial (3A) ein Warnschaubild (4A) ausgebildet ist, das ein Wort, Muster, Symbol oder einen Bedienerhinweis umfasst, wobei das Feuchtigkeitssensormaterial (3A) in einem undurchsichtigen Zustand vorliegt, wenn kein Wasser absorbiert ist und in einem transparenten Zustand vorliegt, nachdem Wasser absorbiert wurde, sodass das Warnschaubild (4A) angezeigt wird

5. Blumentopf, der ein Feuchtigkeitssensormaterial verwendet, um eine Wässerung zu veranlassen, nach Anspruch 4, wobei die Fläche des Warnschaubildes (4A) kleiner als die Fläche der Sensorregion (12A) ist.

## Revendications

1. Pot de fleurs comprenant : un corps de pot extérieur (1A), un corps de pot intérieur (2A), le corps de pot intérieur (2A) étant fabriqué en un matériau multipores et étant placé à l'intérieur du corps de pot extérieur (1A), une zone contenant de l'eau (22A) étant prévue entre la paroi du pot du corps de pot extérieur (1A) et la paroi de pot du corps de pot intérieur (2A) et le bord du pot du corps de pot intérieur (2A) étant pourvu d'un trou de remplissage de l'eau (21A),
**caractérisé en ce que**
le pot de fleurs est un pot de fleurs utilisant du matériau détecteur d'humidité pour causer l'irrigation, le corps de pot extérieur (1A) est fabriqué en un matériau multipores et la paroi extérieure du corps de pot extérieur (1A) est revêtue d'une couche résistante à l'eau (11A) en y réservant une portion pour une région de détection (12A), le pot de fleurs ayant un matériau détecteur d'humidité (3A), le matériau détecteur d'humidité (3A) étant enduit sur la région de détection (12A) du corps de pot extérieur (1A).

2. Pot de fleurs utilisant du matériau détecteur d'humidité pour causer l'irrigation selon la revendication 1, le matériau de la couche résistante à l'eau (11A) étant un vernis coloré.

3. Pot de fleurs utilisant du matériau détecteur d'humidité pour causer l'irrigation selon la revendication 1, le matériau de la couche résistante à l'eau (11A) étant un plastique polymère haute densité.

4. Pot de fleurs utilisant du matériau détecteur d'humidité pour causer l'irrigation selon la revendication 1 dans lequel un graphique d'avertissement (4A) comprenant un mot, un motif, un symbole ou un signe d'incitation est formé entre la région de détection (12A) du corps de pot extérieur (1A) et le matériau détecteur d'humidité (3A), le matériau détecteur d'humidité (3A) présentant un état opaque lorsqu'il n'y a pas absorption d'eau et présentant un état transparent après l'absorption d'eau, ainsi qu'affichant le graphique d'avertissement (4A).

5. Pot de fleurs utilisant du matériau détecteur d'humidité pour causer l'irritation selon la revendication 4 dans lequel la zone du graphique d'avertissement (4A) est plus petite que la zone de la région de détection (12A).
